# EUROPEAN PATENT SPECIFICATION

(11) **EP 4 194 669 B1**
(45) Date of publication and mention of the grant of the patent: **26.02.2025**
(21) Application number: 21213699.8
(22) Date of filing: 10.12.2021
(51) Int. Cl.: F01N 1/10, F16K 47/02

(54) **BRAKE VALVE WITH SILENCER OR SPOUT CONNECTOR**
BREMSVENTIL MIT SCHALLDÄMPFER ODER AUSLAUF
VALVE DE FREIN AVEC SILENCIEUX OU RACCORD DE BEC VERSEUR

(43) Date of publication of application: 14.06.2023
(73) Proprietor: ZF CV Systems Europe BV, 1170 Brussels (BE)
(72) Inventor: ADAMSKI, Krzysztof, 53205 Wroclaw (PL); JAWORSKI, Krzysztof, 51-514 Wroclaw (PL); KESKA, Marcin, 54-062 Wroclaw (PL); MIKSA, Kamil, 98-300 Wielun (PL)
(74) Representative: Ohlendorf, Henrike

(56) References cited:
- JP-A- 2006 029 118

## Description

The invention relates to a brake valve for providing a brake pressure, preferably to a vehicle brake system of a commercial vehicle. The brake valve comprises a housing, a supply connection for receiving a supply pressure, preferably from a compressed air supply, a working connection for providing a brake pressure, preferably to a brake actuator of the brake system, an exhaust portion for discharging pressurized air from the brake valve, and a valve member continuously slidable from an exhaust position to a fully open position including an at least partially open position. The working connection is in fluid communication with the exhaust portion when the valve member is in the exhaust position, and the working connection is in fluid communication with the supply connection and sealed from the exhaust portion when the valve member is in the at least partially open position. The valve member of the brake valve is slidably arranged on a guide element of the brake valve. The guide element comprises an internal channel which forms part of an exhaust flow path between the working connection and the exhaust portion when the valve member is in the exhaust position. A channel inlet of the internal channel is usually oriented towards the working connection.

Brake valves of the aforementioned type are widely used in the vehicle industry to provide braking force for brake mechanisms. Under commercial vehicle, in particular busses, cargo vehicles such as trucks and other heavy duty vehicles are to be understood. The aforementioned brake valves operate as a function of pressurized fluid being provided from a pressure source to the brake actuator such as a brake caliper of a disk brake or a drum brake, for instance. By sliding the valve member to the open position, pressurized air provided to the supply connection at the supply pressure is transmitted to the working port at a brake pressure that corresponds to the position of the valve member between the exhaust position and the open position. When the valve member is in the exhaust position, the working connection is vented and no brake pressure is supplied. When the valve member is in the fully open position a brake pressure substantially equal to the supply pressure will be supplied to the brake actuator. The valve member is movable between the exhaust position and the fully open position by an operator of the vehicle or based on electronic brake signals. For example, the valve member may be biased in the exhaust position and is movable from the exhaust position via a foot pedal attached to the valve member. When a user pushes the pedal, the valve member is moved. As soon as the user releases the pedal, the valve member returns to the exhaust position.

Conventional brake valves comprise an exhaust silencer that reduces noise when the brake actuator is vented via the brake valve. Due to various reasons, for example to allow for foot actuation of the brake valve, conventional brake valves are usually installed close to a base of the vehicle. However, a maximum fording depth of the vehicle is thereby limited. If a water level rises to the exhaust silencer while the vehicle drives through a stream or puddle, water ingresses into the brake valve and adversely affects the brake valve, e.g., by choking a venting path of the brake valve with water. Therefore, fording versions of brake valves have been developed. Instead of an exhaust silencer, the exhaust portion of such brake valves is connected to a spout, which is then connected to an exhaust located at the top of the vehicle via a hose or pipe. However, these fording versions of brake valves are either completely different to standard versions of brake valves or do only have few common parts with standard versions. This results in high development and production costs for fording versions.

JP2006029118A discloses a valve element which is formed in a cylindrical body to open/close an exhaust port of a brake valve as pneumatic equipment. One end face in an axial direction of the cylindrical body is brought into contact with/separated from a valve seat to close/open an exhaust valve. A mesh member as a silencer element is disposed in the valve element. When the exhaust valve is opened, air passes through the mesh member which is disposed to an inner exhaust passage of the valve element, and is exhausted from the exhaust port.

It is therefore an object of the invention to provide an improved brake valve that is usable for both, as a standard version having an exhaust silencer directly attached to the brake valve as well as a fording version sealingly connectable to an exhaust spaced apart from the brake valve.

This problem is solved by the invention according to claim 1, in particular with a brake valve of the aforementioned type, wherein the exhaust portion comprises one or more valve connection elements arranged downstream of the internal channel, and wherein the brake valve comprises a valve sealing surface, preferably for sealingly connecting the brake valve to a functional exhaust device for further discharging the pressurized air received from the brake valve to the environment, wherein the valve sealing surface is arranged downstream of the channel inlet and upstream of the valve connection elements.

The brake valve according to the invention is thus a modular brake valve connectable to both, an exhaust silencer or alternatively to a venting guide. The inventors have found that the brake valve is particularly suited to be either directly connected to an exhaust silencer or to be connected to a functional exhaust device for further discharging the pressurized air. On the one hand, an exhaust silencer may be connected to the valve connection elements without interfering with the valve sealing surface. On the other hand, the valve connection elements do not prevent a sealing connection between the functional exhaust device and the sealing surface. The valve connection elements may further be used to connect the functional exhaust element to the brake valve. The valve connection elements may therefore have a double function.

The sealing surface is a surface prepared for sealingly connecting to the functional exhaust device. Preferably, the sealing surface comprises one or more grooves and/or slots for receiving a sealing element such as an O-ring. Typically, sealing surfaces are precisely machined or precisely molded to provide a smooth surface whereas other surfaces of the brake valve may be rough machined or not machined at all (i.e. a rough cast surface).

The functional exhaust device is configured to further discharge the pressurized air received from the brake valve to the environment. During operation and when the working port of the brake valve is vented, air passes from the working port along the exhaust flow path through the internal channel to the exhaust portion of the brake valve. At the exhaust portion the air is then either exhausted via an exhaust silencer connected to the valve connection elements of the exhaust portion or, in the fording version, is transferred to the functional exhaust device which discharges the pressurized air further. Discharging further means that the pressurized air is not exhausted to the environment in close proximity to the brake valve but at a location spaced apart from the brake valve. For example, the functional exhaust device may be a venting guide that is connected to a hose that transfers the pressurized air to an exhaust silencer spaced apart from the brake valve when the brake valve is installed in a vehicle. The flow direction is defined from the working connection to the exhaust portion. Hence, the flow direction describes the direction, which air at the working connection provided at a pressure above an environmental pressure follows when it is exhausted to the environment through the brake valve. The pressurized air then flows from the working connection via the exhaust flow path and the exhaust portion to the environment. The brake valve is preferably suited for providing a brake pressure to a pneumatic vehicle brake system of a commercial vehicle.

The valve connection elements may comprise slots for receiving hooks, one or more threaded portions, one or more hooks and/or one or more protrusions. Preferably, the valve connection elements may form a bayonet connector half. It shall be understood that the valve connection elements may also be formed by one element, only. For example, a single threaded portion may form the valve connection elements.

In a first preferred embodiment, the exhaust portion comprises an exhaust cavity formed in the housing, wherein the exhaust cavity comprises an outer opening and wherein the internal channel opens into the exhaust cavity. The outer opening opens towards the environment when no other element such as the functional exhaust device or an exhaust silencer is connected to the brake valve. An end of the internal channel opposite the channel inlet is arranged upstream of the outer opening. The internal channel is thereby protected from damages. Moreover, ingress of water or other substances into the internal channel is effectively prevented when an external element such as the functional exhaust device closes the outer opening.

Preferably, the valve connection elements are arranged between the internal channel and the outer opening of the exhaust cavity. The valve connection elements are formed in the exhaust cavity. A spatial relation between the internal channel and the valve connection elements and/or the outer opening and the valve connection elements can be easily ensured during manufacturing of the brake valve. Moreover, for engaging complementary connection elements of an external element, such as the functional exhaust device with the valve connection elements, the external element needs to be at least partially inserted into the exhaust cavity, whereby sealing of the outer opening is facilitated.

In an alternative embodiment, the connection elements are formed on an exterior surface of the housing. Connection elements formed on an exterior surface of the housing are easily accessible. Machining of the connection elements as well as assembly is facilitated. However, connection elements arranged on an exterior surface of the housing are less protected from damage than connection elements arranged inside the exhaust cavity and sealing of the outer opening can be more difficult.

The valve sealing surface is preferably formed on the guide element. By providing the valve sealing surface on the guide element, sealing of the internal channel can be easily ensured and ingress of water or other substances is effectively prevented. Moreover, the guide element comprises a sliding surface on which the valve member is slidably arranged. This sliding surface needs to be precise. The guide element is preferably machined and/or (injection-)molded. Preferably the guide element is made from plastic material. During manufacturing and/or molding of the precise sliding surface, the valve sealing surface may be formed at a high precision with little additional effort. Manufacturing time and cost of the brake valve as a whole can be reduced. Moreover, a spatial relation of the internal channel and the valve sealing surface is ensured which prevents assembly errors. In other embodiments, the guide element is preferably formed by additive manufacturing (3D-printing). In an alternative embodiment, the valve sealing surface may also be formed on the housing. Preferably, the valve sealing surface is formed on an inner surface of the internal channel. Preferably, the valve sealing surface comprises a cylindrical sealing portion, that according to a particularly preferred embodiment is an inner surface at least partially defining the internal channel. Additionally or alternatively, the valve sealing surface may comprise an axial sealing surface of the internal channel substantially perpendicular to a flow direction defined by the exhaust flow path.

The internal channel preferably comprises a channel outlet opposite the channel inlet, wherein a bottleneck portion of the exhaust flow path is arranged upstream of the channel outlet of the internal channel. The internal channel extends between the channel inlet and the channel outlet and forms part of the exhaust flow path. This exhaust flow path has a bottleneck portion that forms the narrowest cross section of the flow path along its entire path from the working connection to the exhaust connection. By arranging the bottleneck portion upstream of the channel outlet, a defined flow behavior of air travelling along the flow path can be ensured, since the bottleneck portion significantly influences the flow behavior.

In a further preferred embodiment, the internal channel has an upstream section having a first internal channel cross sectional area and a downstream section having a second internal channel cross sectional area larger than the first internal channel cross sectional area, wherein the valve sealing surface is formed on the downstream section. Preferably, the upstream section forms the bottleneck portion of the exhaust flow path. By forming the valve sealing surface on the internal channel, sealing the exhaust flow path is facilitated when the functional exhaust element is connected to the valve sealing surface. Since the second internal cross sectional area is enlarged relative to the first internal cross sectional area, a cross sectional area of a flow path downstream of the upstream section may be kept constant even if the functional exhaust element is received in the downstream section of the internal channel.

According to a second aspect of the invention, the above stated object is solved by a brake valve assembly comprising the brake valve according to any of the preferred embodiments of the fist aspect of the invention described above and a venting guide, wherein the venting guide forms the functional exhaust device. The venting guide is configured for sealingly connecting to the valve sealing surface and for receiving the pressurized air from the brake valve. The venting guide is adapted to further exhaust the air received from the brake valve and is therefore connectable to a pipe, hose or other suitable conduit for guiding the pressurized air to an exhaust spaced apart from the brake valve.

According to a preferred embodiment, the venting guide comprises a spout and a venting guide fixing bracket. The spout is preferably formed as an elongated element for guiding the pressurized air received from the brake valve. Preferably, the spout is adapted to serve as a hose connector. A hose for further discharging pressurized air may be put over the spout and fixed to the spout by a hose clamp or other suitable device. The fixing bracket is preferably adapted for engaging the valve connection elements.

Preferably, the spout and the venting guide fixing bracket are separate elements, wherein a venting guide sealing portion for sealingly connecting to the valve sealing surface is formed on the spout and wherein complementary connection elements for engaging the valve connection elements are preferably formed on the venting guide fixing bracket. During assembly, the venting guide sealing portion of the spout may then be brought into sealing contact with the valve sealing surface and the spout may then be fixed to the brake valve via the fixing bracket.

In a further preferred embodiment, the venting guide fixing bracket is configured to abut the spout on a side opposite the venting guide sealing portion and is preferably configured to press the venting guide sealing portion into contact with the sealing surface. Preferably, the fixing bracket therefore comprises flexible elements adapted to be deformed and to provide a restoring force once deformed. Preferably, the flexible elements are deformed, when the venting guide sealing portion contacts the valve sealing surface and when the bracket abuts the spout and engages the valve connection elements. By pressing the spout into contact with the sealing surface, a tight sealing connection between the spout and the brake valve can be ensured. Ingress of water is prevented. Preferably, the flexible elements are formed by longitudinal slots allowing deformation, preferably of a dome section, of the fixing bracket.

Preferably, a step is formed between the upstream section and the downstream section of the internal channel and the spout abuts the step, preferably such that a smooth transition is formed between the upstream section and an internal spout channel. In a particularly preferred embodiment, the step is perpendicular to first inner surface of the internal channel defining the upstream section proximate to the step and/or perpendicular to a second inner surface of the internal channel defining the downstream section proximate to the step. The step then helps in correctly positioning the spout relative to the guide element. Preferably, the step forms or carries the valve sealing surface. A smooth transition is formed and no sharp transitions of the flow path such as steps are formed between the upstream section and the internal spout channel. Preferably, an internal cross section of the upstream section is substantially identical to an internal spout channel cross section of the internal spout channel. It shall be understood that a smooth transition between the upstream section and the internal spout channel still allows for small inconsistencies in the flow path resulting from manufacturing tolerances. Moreover, a transition element providing a smooth transition between the upstream and the internal spout channel section may be provided.

In a third aspect, the invention solves the above described object with a brake valve assembly comprising the brake valve according to the first aspect of the invention and a silencer, wherein the silencer forms the function exhaust device, the silencer preferably comprising a silencer fixing bracket and sound insulating material. The silencer fixing bracket is adapted to engage the valve connection elements and for holding the sound insulating material in place. The sound insulating material allows flow of the pressurized air received from the brake valve to the environment and is configured to dampen noise resulting therefrom. The brake valve assembly according to the third aspect of the invention is configured for standard use when no large fording depth of a vehicle comprising the brake valve assembly is needed. The brake valve assembly according to the second aspect of the invention provides a fording version of a brake valve assembly. The brake valve according to the first aspect of the invention is usable in both brake valve assemblies (according to the second aspect as well as the third aspect). Hence, the brake valve is flexible to use. No separate brake valve usable as a fording version needs to be designed and the brake valve can be produced at higher total numbers which results in reduced manufacturing cost.

According to a fourth aspect of the invention, the above stated object is solved by a brake system for a vehicle, in particular for a commercial vehicle, comprising a brake valve according to any of the preferred embodiments of the first aspect of the invention, preferably comprising a brake valve assembly according to the second or third aspect of the invention. In a fifth aspect, the invention solves the above stated object by a vehicle, in particular a commercial vehicle, comprising a brake system according to the fourth aspect of the invention.

According to a sixth aspect of the invention, the above stated object is solved by an assembly method for assembling a brake valve assembly, comprising the steps: providing a venting guide as the functional exhaust device; engaging a venting guide sealing portion of the venting guide with a valve sealing surface of the brake valve; engaging a complementary connection element of the venting guide with a valve connection element of the brake valve. Alternatively, the assembly method may comprise the steps of: providing a silencer as the functional exhaust device; and engaging a complementary connection element of the silencer with a valve connection element of the brake valve

It should be understood that brake valve according to the first aspect of the invention, the brake valve assembly according to the second aspect of the invention, the brake valve assembly according to the third aspect of the invention, the brake system according to the fourth aspect of the invention, the vehicle according to the fifth aspect of the invention and the method according to the sixth aspect of the invention preferably have similar or equal aspects, in particular as they are described in the dependent claims. Thus, reference is made to the above description of the brake valve according to the first aspect of the invention.

For a more complete understanding of the invention, the invention will now be described in detail with reference to the accompanying drawings. The detailed description will illustrate and describe what is considered as preferred embodiments of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed herein after. Further, the features described in the description, the drawings and the claims disclosing the invention may be essential for the invention considered alone or in combination. In particular, any reference signs in the claims shall not be construed as limiting the scope of the invention. The wording "comprising" or "including" does not exclude other elements or steps. The word "a" or "an" does not exclude the plurality. The wording "a number of" items comprising also the number 1, i.e. a single item, and further numbers like 2, 3, 4 and so forth.

In the accompanying drawings:
- Fig. 1: shows a schematic layout of a vehicle having a brake system comprising a brake valve assembly in a fording version;
- Fig. 2a: shows a cut view of a single circuit brake valve assembly in a fording version;
- Fig. 2b: shows a cut view of a dual circuit brake valve assembly in a standard version;
- Fig. 3: shows a detail of Fig. 2a;
- Fig. 4: shows a cut view of a brake valve assembly in a standard version;
- Fig. 5: shows a perspective view of a spout connectable to the brake valve assembly according to Fig. 2a or 3;
- Fig. 6: shows a perspective view of a silencer fixing bracket;
- Fig. 7: shows a perspective view of a venting guide fixing bracket; and
- Fig. 8: shows a flow chart of an assembly method.

A vehicle 200, in particular a commercial vehicle 202, comprises a front axle 204 and a rear axle 206. For braking front wheels 208.1, 208.2 of the front axle 204 and rear wheels 210.1, 210.2 of the rear axle 206 the vehicle 200 comprises a brake system 100 having a front axle brake circuit 102 for braking the front wheels 208.1, 208.2 and a rear axle brake circuit 104 for braking the rear wheels 210.1, 210.2. For braking the wheels 208.1, 208.2, 210.1, 210.2, the brake system 100 comprises front axle brake actuators 106.1, 106.2 and rear axle brake actuators 108.1, 108.2. The front axle brake actuators 106.1, 106.2 are connected to a front axle brake modulator 110 while the rear axle brake actuators 108.1, 108.2 are connected to a rear axle brake modulator 112. For providing compressed air at a supply pressure pS, the brake system 100 comprises a compressed air supply 114. Of course, it may comprise more than one air supply.

In order to brake the vehicle 200 a brake pressure pB needs to be supplied to the front axle brake modulator 110 and the rear axle brake modulator 112. For providing the brake pressure pB, the brake system 100 comprises a brake valve assembly 99 comprising a brake valve 1 and a functional exhaust element 2. The brake valve 1 comprises a housing 6, having a supply connection 8, a working connection 10, and an exhaust portion 12. The supply connection 8 is connected to the compressed air supply 114 via supply line 120.1 for receiving pressurized air at the supply pressure pS.

Upon actuation by a user, the brake valve 1 of the brake valve assembly 99 provides a brake pressure pB corresponding to the degree of actuation provided by the user. To allow an actuation, the brake valve 1 comprises an actuation element 14, which is formed as a brake pedal 16 in this embodiment. The brake valve 1 is configured to modulate the brake pressure pB supplied to the working connection 10 dependent on a degree of actuation of the actuation element 14. If the brake pedal 16 is only slightly actuated, a low brake pressure pB is supplied to the working connection 10 while a high brake pressure pB is supplied to the working connection 10 when the brake pedal 16 is fully actuated.

The brake valve 1 is connected to the front axle brake modulator 110 and the rear axle brake modulator 114 via connecting lines 116, 118. In this embodiment the brake valve 1 is formed as a single circuit brake valve 1 having only one working connection 10 for providing brake pressure pB. Both, the front axle connecting line 116 connecting the brake valve 1 to the front axle brake modulator 110 as well as the rear axle connecting line 118 connecting the brake valve 1 to the rear axle brake modulator 112 are connected to the same working connection 10 of the brake valve 1. In other embodiments, the brake valve 1 could also be formed as a multi circuit brake valve 1 having multiple working connections 10 for providing the same and/or different brake pressures pB to the brake circuits 102, 104.

The brake modulators 110, 112 receive the brake pressure pB provided by the brake valve 1 and provide pressurized air at the same brake pressure pB but at a higher volume to the respective brake actuators 106.1, 106.2, 108.1, 108.2. Therefore, the brake modulators 110, 112 are also connected to the compressed air supply via supply lines 120.2, 120.3. It shall be noted that the front axle brake modulator 110 and/or the rear axle brake modulator 112 may also be configured to further modify the brake pressure pB. For example, the front axle brake modulator 110 could comprise ABS-modules (not shown) for providing an ABS-function. Moreover, the brake actuators 106.1, 106.2, 108.1, 108.2 may also be directly connected to the brake valve 1.

For releasing the brake of the vehicle 200 the break pressure pB needs to be released from the brake actuators 106.1, 106.2, 108.1 108.2. The brake valve 1 is therefore configured to exhaust the brake actuators 106.1, 106.2, 108.1 108.2 by connecting the working connection 10 to the exhaust portion 12. In order to exhaust pressurized air, the air needs to be released to the environment through an opening. Such an opening, however, allows water to enter the brake system 100. Brake valves, in particular brake valves having a brake pedal, are is usually located in a low position of the vehicle 200. A maximum fording depth of the vehicle 200 is thereby limited, since water could ingress in the brake system 100 via the exhaust portion 12 when the vehicle 200 drives through water and the water level reaches to the exhaust portion. In regular vehicles the available maximum fording depth is sufficient and standard brake valves assemblies 99 can be used. If however, increased fording depths are needed, special measures need to be taken. Therefore, fording versions of brake valves and/or brake valve assemblies are provided.

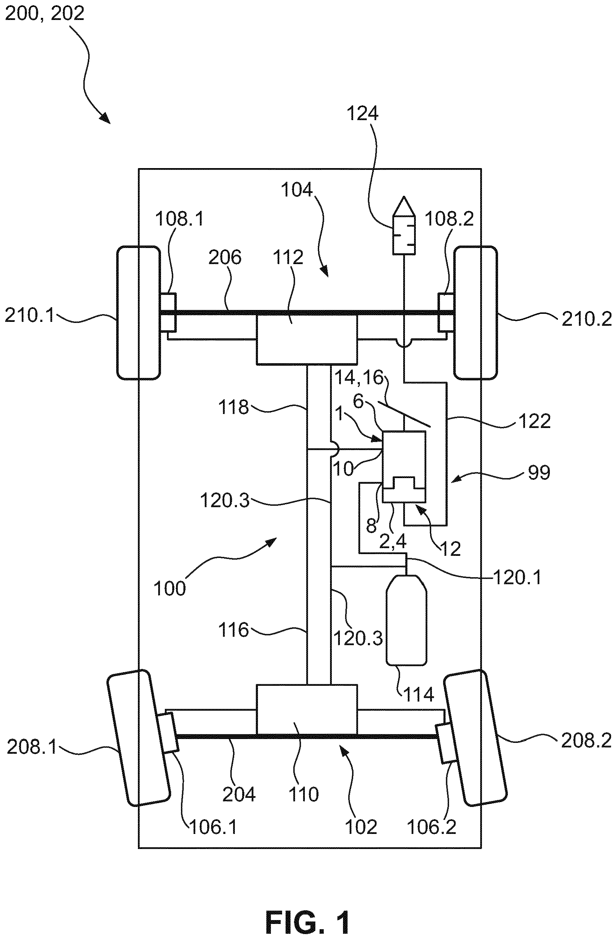

In Fig.1, the brake valve assembly 99 is a fording version, wherein the functional exhaust element 2 is a venting guide 4. The venting guide 4 is connected to an exhaust line 122, which is connected to a remote exhaust silencer 124. For releasing the brakes of the vehicle 200, the brake pressure pB is released from the brake actuators 106.1, 106.2, 108.1 108.2 via the connecting lines 116, 118, the brake valve 1, the venting guide 4, the exhaust line 122, and the remote exhaust silencer 124.

The venting guide 4 is sealingly connected to the brake valve 1 and thereby enables a sealing connection between the brake valve 1 and the exhaust line 122. The remote exhaust silencer 124 is spaced apart from the brake valve 1 and placed at a high position on the vehicle 200. By placing the exhaust silencer 124 at a high position of the vehicle 200, ingress of water into the brake system 100 is prevented when the vehicle 200 drives through water.

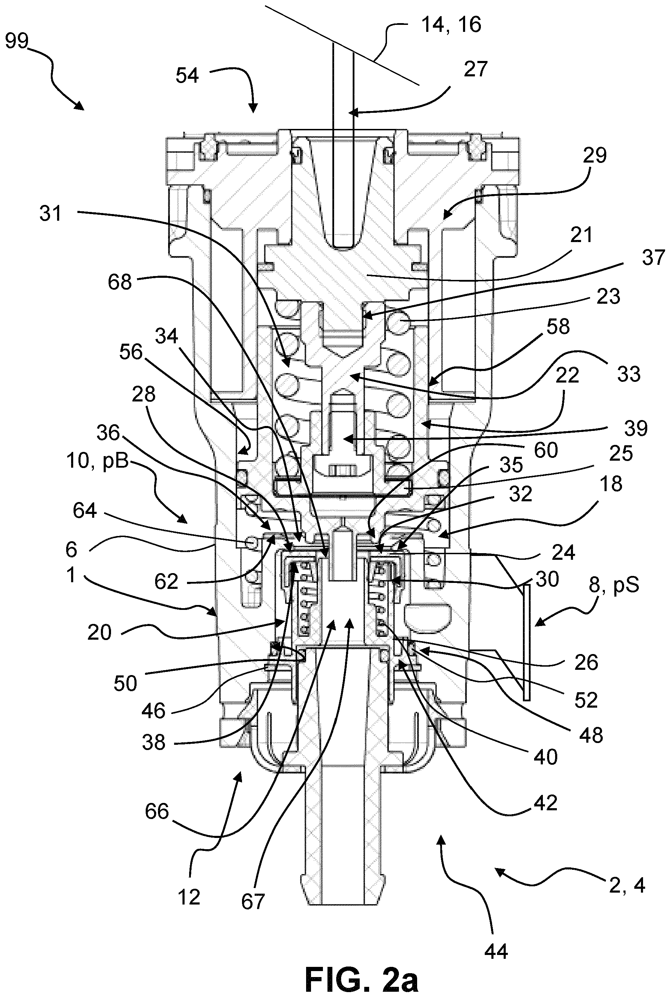

Fig.2a shows the brake valve assembly 99 depicted in Fig.1 in more detail. The housing 6 defines a first valve cavity 18 and a second valve cavity 20. A piston 22 of the actuation element 14 is slidably arranged in the first valve cavity 18. A valve member 24 and a guide element 26 are arranged in the second valve cavity 20. The valve member 24 is slidably arranged on the guide element 26 such that it is movable between an exhaust position 28 shown in Fig.2a and a fully open position (indicated with the help of reference point or sign "30" in e.g., Fig. 2a) including an at least partially open position. In particular, reference sign 30 of Fig. 2a could indicate a contact point between the valve member 24 and the guide element 26 when e.g., the valve member 24 moves/slides towards In the exhaust position 28 a fist valve member side 34 of a valve member head 32 of the valve member 24 abuts a first valve seat 35 arranged on a transition 36 between the first valve cavity 18 and the second valve cavity 20. As will be explained in more detail below, movement of valve member 24 is possible due to contact between piston head 60 and valve member head 32. In the fully open position 30 the piston 22 abuts a hard stop 62 formed by the housing on the transition 36 between the first valve cavity 18 and the second valve cavity 20. The hard stop 62 limits the pistons 22 range of movement such that the valve member 24 reaches the fully open position 30 when the piston 22 contacts the hard stop 62. In the fully open position 30, a second valve member side 38 of the valve member head 32 and the guide element 26 are preferably spaced apart to prevent damages on the valve member 24. A gap between valve member 24 and valve seat 35 reaches its maximum, when the piston 22 reaches the fully open position 30 (abuts the hard stop 62). Since the stop function is already provided by the hard stop 62, no physical contact is required between the second valve member side 38 and the guide element 26. Thus the valve member 24 is prevented from damages. The valve member 24 is biased into the exhaust position 28 by a return spring 40 arranged between the second valve member side 34 and a bottom section 42 of the guide element 26.

The guide element 26 is inserted into the second valve cavity 20 from a first housing side 44 and held in place by a lock ring 46. For sealing a gap between an outer circumferential face 48 of the guide element 26 and an inner wall 50 of the housing 6 defining the second valve cavity 20, an O-ring 52 is provided between the guide element 26 and the inner wall 50.

The piston 22 is inserted into the first valve cavity 18 from a second housing side 54. Another O-ring 52 is provided between the piston 22 and a second inner wall 56 of the housing 6 defining the first valve cavity 18. The piston 22 sealingly closes off the first valve cavity 18 and is movable between a released position 58 shown in Fig. 2a and a fully actuated position. In the fully actuated position a piston head 60 of the piston 22 abuts the valve member head 32 on the first valve member side 34 and the piston 22 abuts the hard stop 62 formed by the housing on the transition 36 between the first valve cavity 18 and the second valve cavity 20.

The piston 22 is biased towards the released position 58 (in Fig. 2a upwards) by a piston spring 64 such that the piston 22 remains in the released position 58 as long as no force larger than a corresponding force provided by the piston spring 64 is provided to the brake pedal 16. A pressure piece 21, a set spring 23 and a spring seat 25 functionally connect the brake pedal 16 to the piston 22. A push rod 27 of the brake pedal 16 is received in the pressure piece 21 which is in turn slidably received in a cover 29 closing the housing 6 on the second housing side 54. The spring seat 25 is received in a transfer cavity 31 of the piston 22. A connector 33 is screwed on a threaded portion 37 of the pressure piece 21 and extends through the spring seat 25. The cover 29 is fixed to the housing 6 and limits movement of the pressure piece 21 away from the piston 22 (in Fig. 2a upwards). The set spring 23 is arranged between the pressure piece 21 and the spring seat 25 and around the connector 33 for biasing the spring seat 25 away from the pressure piece 21. The connector 33 is slidably received in the spring seat 25. However, a screw head of a screw 39 limits movement of the pressure piece 21 together with connector 33 away from the spring seat 25 such that a maximum distance between the pressure piece 21 and the spring seat 25 is reached when the screw head of the screw 39 abuts the spring seat 25. The set spring 23 between pressure piece 21 and spring seat 25 creates the pneumatic characteristic. A maximum stroke of set spring 23 is reached when pressure piece 21 is touching piston 22. During assembly spring seat 25, pressure piece 21, set spring 23 and connector 33 are assembled together, wherein screw 39 connects spring seat 25 to connector 33. This preassembly is then assembled in piston 22, Moreover, the piston spring 64 pushes the piston 22 and the spring seat 25 towards the second housing side 54 (upwards in Fig. 2a). The screw 39 sets dependent on its position a "0 position" between spring seat 25 and connector 33 attached to pressure piece 21. When the screw 39 is loosened, a space between the pressure piece 21 and the spring seat 25 is increased such that the pre-tension of the set spring 23 is decreased.

Upon actuation of the brake pedal 16, the pressure piece 21 moves towards the first housing side 44 (in Fig. 2a downwards). This movement compresses the set spring 23 and the pressure piece 21 moves towards the spring seat 25. The set spring 23 provides a compression counter force to the spring seat 25 and the piston 22, which in turn moves the piston 22 downwards against the piston spring 64 arranged between the piston 22 and the housing 6. Hence, actuation of the brake pedal 16 leads to compression of the piston spring 64 as well as the set spring 23. An extent by which the pressure piece 21 and the piston 22 move, depends on the compression counter forces (or biasing forces) provided by the set spring 23 and the piston spring 64, since the forces provided by the set spring 23 and the piston spring 64 need to be in equilibrium as long as the pressure piece 21 is spaced apart from the piston 22. Once the set spring 23 has been compressed such that the pressure piece 21 abuts the piston 22, the pressure piece 21 and the piston 22 move in unison. Further actuation of the brake pedal 16 moves the piston 22 towards the fully open position 30 (in Fig. 2a downwards), since a direction connection is established between the brake pedal 16 and the piston 22 via the push rod 27 and the pressure piece 21.

The set spring 23, the spring seat 25 and the screw 39 provide means for setting a pedal feedback of the brake pedal 16. When the set spring 23 is pretensioned to a high degree, the piston 22 is moved at a light actuation of the brake pedal 16, since large forces are required for further compressing the set spring 23. When, on the other hand, pre-tensioning of the set spring 23 is low, the pressure piece 21 performs a free stroke (or empty stroke) towards the piston 22 upon initial actuation of the brake pedal 16, since almost no force is required for compressing the set spring 23. In this case, when the brake pedal 16 is initially moved, only the pressure piece 21 moves towards the piston 22 while the piston 22 itself substantially maintains its position. The valve member 24 substantially maintains its position as well and consequently no brake pressure pB is provided to the working connection 10.

After a potential free stroke of the pressure piece 21, the piston 22 is moved from the released position 58 towards the fully open position (in Fig. 2a downwards) against the biasing force provided by the piston spring 64. In between the released position 58 and the fully open position, the piston head 60 abuts the valve member 24 whereby a sealing contact is formed between the piston head 60 and the valve member head 32. When the piston 22 is further actuated by the brake pedal 16, it pushes the valve member 24 from the exhaust position 28 towards the fully open position 30. The piston 22 is biased towards the released position 58 by the piston spring 64 arranged between the piston 22 and the housing 6 such that the piston 22 returns to the released position 58 when no actuation force is applied to the brake pedal 16.

The guide element 26 comprises an internal channel 66 and a through hole 68 is provided in the valve member head 32 such that the first inner cavity 18 is in fluid communication with the exhaust portion 12 of the brake valve 1, when the piston head 60 is separated from the valve member head 32 (when the piston 22 is in the released position 58). When the actuation element 14 is at least partly actuated, the piston head 60 sealingly contacts the valve member head 32 and thereby separates the exhaust portion 12 from the fist valve cavity 18. However, the valve member 24 is then in an at least partially open position wherein the valve member head 32 is separated from the valve seat 35 such that the second valve cavity 20 is in fluid communication with the first valve cavity 18.

The supply connection 8 is in direct fluid communication with the second valve cavity 20 such that pressurized air at the supply pressure pS is provided thereto. When the valve member 24 is in the exhaust position 28 the second valve cavity 20 is closed off from the first valve cavity 18 and the exhaust so that the supply connection 8 is not directly connected to the exhaust. If starting from the exhaust position 28, and a brake pressure shall be applied to the working connection 10, the brake pedal 16 needs to be actuated (pushed downwards with respect to Fig. 2a). The piston 22 moves against the biasing force of the piston spring 64 and abuts the valve member head 32 with its piston head 60. The valve member head 32 is moved out of the exhaust position and a gap is formed between the valve seat 35 and the first valve member side 34 of the valve member head 32. Pressurized air provided to the second valve cavity 20 via supply connection 8 may then flow from the second valve cavity 20 to the first valve cavity 18. The working connection 10 is in direct fluid communication with the first valve cavity 18 such that pressurized air at the brake pressure pB is supplied to the working connection 10 when the valve member 24 is an at least partially open position. The pressure level of the brake pressure pB depends on the size of the gap formed between the valve seat 35 and the valve member head 32. If the gap is small, a high pressure drop occurs and the brake pressure pB supplied to the working connection 10 is much smaller than the supply pressure pS. When the valve member 24 is in the fully open position 30, the gap formed between the valve seat 35 and the valve member head 32 is large enough that the brake pressure pB is substantially equal to the supply pressure pS. In this case, the brake actuators 106.1, 106.2, 108.1, 108.2 connected to the working connection 10 are fully actuated and a maximum braking force is applied. It shall be noted, that movement of the piston 22 depends on actuation of brake pedal 16 and deflection of set spring 23 as well as additional factors like friction and a force supplied by return spring 64. The set spring 23 deflects, since the brake pressure pB established in the first valve cavity 18 acts on the exposed area of piston 22 facing towards the first valve cavity 18. As the gap between the valve member head 32 and the valve seat 35 increases, the brake pressure pB also increases. Set spring 23 is deflected (compressed) such that part of a movement of the pressure piece 21 towards the first housing side 44 is compensated by set spring 23. Movement of the piston 22 is therefore not necessarily uniform to a movement of push rod 27 and pressure piece 21. A partial braking characteristic of the brake valve 1 is configurable via set spring 23. When the set spring 23 is fully compressed, pressure piece 21 contacts piston 22 and a uniform movement of piston 22 and push rod 27 is established. Preferably, contact of piston 22 and pressure piece 21 results in a sudden increase of the gap between valve seat 35 and valve member head 32 resulting in a jump of the pressure level of the brake pressure pB supplied to the first valve cavity 18 and working connection 10. Further preferred, a pressure level of brake pressure pB substantially equal to the supply pressure pS is established when pressure piece 21 abuts piston 22.

When the brake pedal 16 is released, the piston 22 and the valve member 24 are returned to the released position 58 and the exhaust position 28 respectively by the springs 40, 64. The valve member head 32 abuts the valve seat 35 and thereby separates the first valve cavity 18 from the second valve cavity 20. Once valve member 24 has reached the exhaust position 28 further movement of valve member 24 is stopped by the valve seat 35. The piston 22, however, moves on such that the piston head 60 separates from the valve member head 32. The first valve cavity 18 is then once again in fluid communication with the exhaust portion 12 via a through hole 68 and an internal channel 66. Pressurized air at the brake pressure pB may then flow along an exhaust flow path 67 from the working connection 10 to the exhaust portion 12 via the first valve cavity 18, the gap formed between the piston head 60 and the valve member head 32, the through hole 68 and the internal channel 66 formed in the guide element 26.

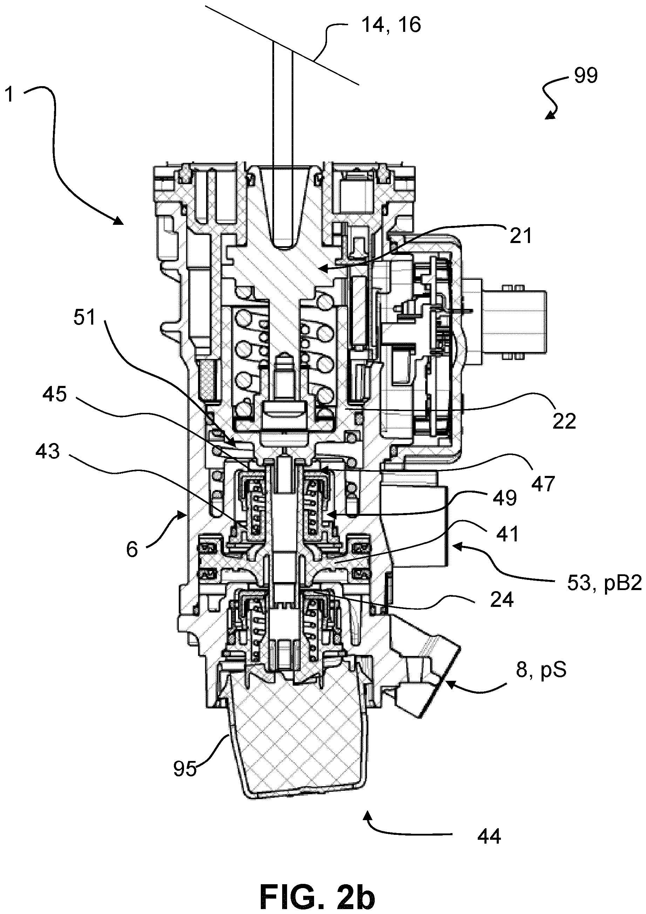

While the brake valve 1 depicted in Fig. 2a is a single circuit brake valve for providing the brake pressure pB to a single brake circuit 102, 104, the brake valve 1 may also be formed of a dual circuit type. Fig. 2b shows a preferred embodiment of such a brake valve 1 of the dual circuit type. The brake valve 1 shown in Fig. 2b is configured for providing the brake pressure pB to one of the brake circuit 102, 104 and a secondary brake pressure pB2 to the other brake circuit 102, 104. In the brake valve 1 of the dual circuit type, the piston 22 does not directly actuate the valve member 24. Instead, a secondary piston 41 is arranged between the piston 22 and the valve member 24. Movement of the piston 22 is initiated as described above with reference to Fig. 2a by pushing the brake pedal 16. Upon actuation the piston 22 moves towards the first housing side 44 (in Fig. 2b downwards).

A secondary piston 41 extends through a secondary guide element 43 guiding a secondary valve member 45. Upon actuation, the piston 22 moves the secondary valve member 45. The secondary valve member 45 functions substantially identical to the valve member 24. When contacting a secondary valve seat 47, the secondary valve member 45 blocks pressurized air provided at the supply pressure pS to a secondary supply cavity 49 via the supply connection 8 from flowing to a secondary working cavity 51 connected to a secondary working connection 53. When removed from the secondary valve seat 47 a gap is formed between the housing 6 and the secondary valve member 45 at the valve seat 47 allowing air to flow from the secondary supply cavity 49 to the secondary working cavity 51. A pressure level of the pressurized air provided to the secondary working connection 53 via this gap and the secondary working cavity 51 depends on the size of the gap. A large gap results in a high secondary brake pressure pB2 being provided to the secondary working connection 53 and a small gap results in a low secondary brake pressure pB2 being provided to the secondary working connection 53. When both circuits function correctly, pressure from the secondary working cavity 51 acts on the secondary piston 41 via secondary guide element 43. The secondary piston 41 is moved by this pressure (a force resulting from the pressure) and acts on the valve member 24 for supplying the brake pressure pB. In case of a malfunction (no brake pressure supplied to secondary working cavity 51), the piston 22 may mechanically actuate the secondary piston 41 such that at least the brake pressure pB is supplied. The brake pressure pB and the secondary brake pressure pB2 may have the same or different pressure levels. The pressure level of the brake pressure pB and the secondary brake pressure pB2 depend on the dimensions of the respective valve members 24, 45 and characteristics of the springs biasing the valve member 24 and the secondary valve member 45 towards their respective valve seats 35, 47. Moreover, the pressure level of the brake pressure pB and the secondary brake pressure pB2 depends on the type of seal chosen for secondary piston 41, position of the seals as well as the dimensions of secondary piston 41. For example, the working connection 10 could provide the brake pressure pB to the front axle brake circuit 102 while the secondary working connection 53 provides the secondary brake pressure pB2 having a lower pressure level to the rear axle brake circuit 104.

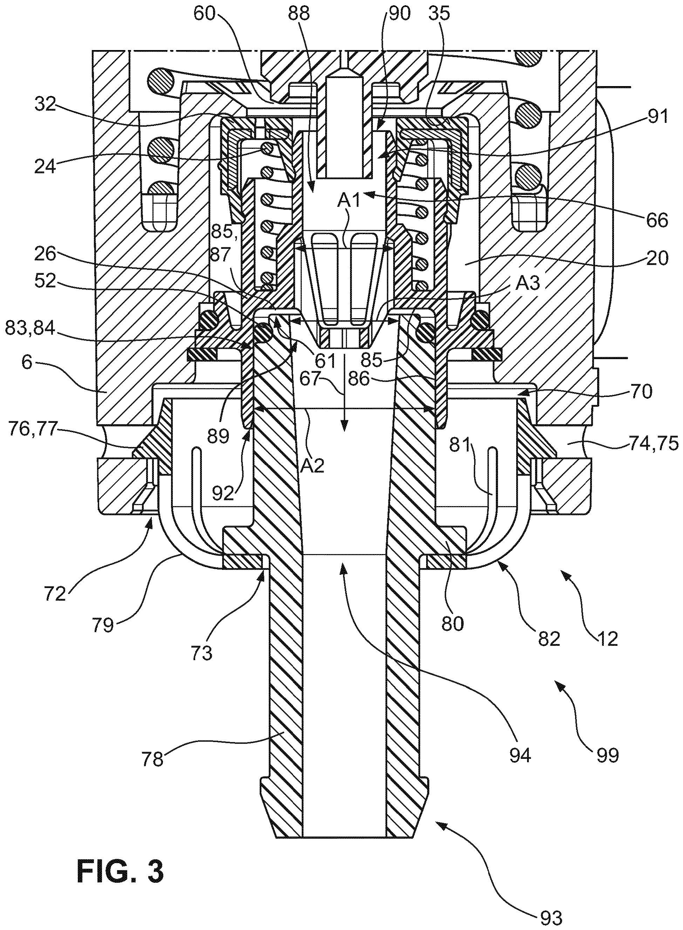

The exhaust portion 12 is configured for exhausting air from the brake valve 1. While in the brake valve assembly 99 shown in Fig. 2b, the air directly exhausts to the environment via an exhaust silencer 95, the exhaust portion 12 of the brake valve assembly 99 shown in Fig. 2a does not directly exhaust the pressurized air to the environment. Instead, the pressurized air is provided to the venting guide 4. The exhaust portion 12 and the venting guide 4 will be further described with relation to Fig. 3 showing a detail of the brake valve 99 depicted in Fig. 2a.

The exhaust portion 12 comprises an exhaust cavity 70 formed by the housing 6. The exhaust cavity 70 is arranged between the second valve cavity 20 and an outer opening 72. The internal channel 66 opens into the exhaust cavity 70. If the venting guide 4 were not connected to the brake valve 1, the outer opening 72 would form an opening of the brake valve 1 to the environment. However, in the brake valve assembly 99 shown in Fig. 3, the venting guide 4 is connected to the brake valve 1. Valve connection elements 74 are provided on the housing 6 downstream of the internal channel 66 and upstream of the outer opening 72. In this embodiment, the connection elements 74 are formed as slots 75, in which complementary connection elements 76 formed as snap hooks 77 of the venting guide 4 are received.

The venting guide 4 comprises a spout 78 and a venting guide fixing bracket 79. In this embodiment the spout 78 and the venting guide fixing bracket 79 are formed as separate elements. The spout 78 extends through the venting guide fixing bracket 79 which abuts the spout 78 on a spout shoulder 80. Flexing slots 81 are provided in a dome portion 82 of the venting guide fixing bracket 79 such that the venting guide fixing bracket 79 is partially flexible and configured to press the spout 78 towards the brake valve 1.

The brake valve 1 comprises a valve sealing surface 83, which is here formed on the guide element 26. In particular, the valve sealing surface 83 is an inner sealing face 84 formed on the internal channel 66. The inner sealing face 84 comprises a first sealing face 85 oriented substantially perpendicular to the exhaust flow path 67 and a second sealing face 86 substantially parallel to the exhaust flow path 67. To ensure the sealing connection between the functional exhaust element 2 and the brake valve 1, a sealing element in the form of an O-ring 52 is arranged between the spout 78 and the second sealing face 86. Additionally or alternatively, a seal may be formed between the first sealing face 85 and the spout 78. In this embodiment, the first sealing face 85 is formed by a step 87 between an upstream section 88 and a downstream section 89 of the internal channel 66. The venting guide fixing bracket 79 presses a venting guide sealing portion 61 of the spout 78 towards the step 87, preferably into contact with the step 87, and thereby ensures a sealing connection of the spout 78 to the valve sealing surface 83.

The valve sealing surface 83 is provided downstream of a channel inlet 90 of the internal channel 66 that is oriented towards the working connection 10. Moreover, the valve sealing surface 83 is provided upstream of the valve connection elements 74. This ensures that water is prevented from entering into the internal channel 66 and the valve cavities 18, 20 even if water enters through the valve connection elements 76.

The upstream section 88 of the internal channel 66 has a first internal channel cross sectional area A1 and the downstream section 89 has a second internal cross sectional area A2 that is larger than the first internal channel cross sectional area A1. A bottleneck portion 91 of the exhaust flow path 67 is arranged upstream of a channel outlet 92 of the internal channel 66. When the valve member 32 is in the fully open position 30 the bottleneck portion 91 of the exhaust flow path 67 is arranged upstream of a channel outlet 92 and in the upstream section 88 of the internal channel 66.

The spout 78 has an elongate shape extending out of the exhaust cavity 70 and away from the brake valve 1. In this embodiment, the spout 78 is straight. At a spout end 93 oriented away from the brake valve 1, the spout 78 is adapted to be inserted in a hose (not shown) which can be clamped onto the spout 78 with a hose clamp (not shown). For guiding the pressurized air received from the exhaust portion 12 of the brake valve 1, the spout 78 further comprises a spout channel 94. The spout channel 94 tapers towards the spout end 93. Near the valve sealing surface 83 (opposite the spout end 93) a spout cross sectional area A3 of the spout channel 94 is substantially equal to the first internal channel cross sectional area A1 such that a smooth transition is provided between the internal channel 66 of the guide element 26 and the spout channel 94 of the spout 78.

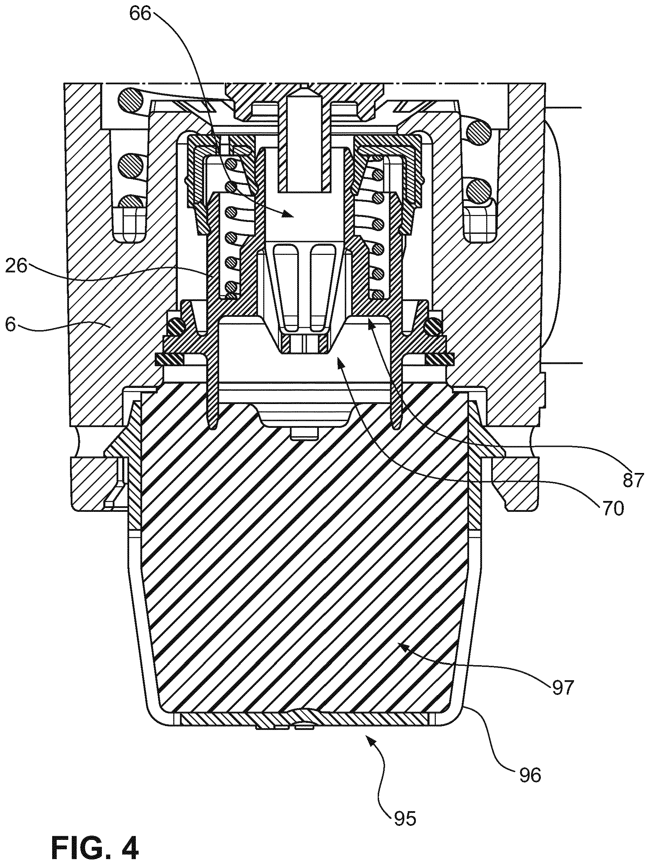

Fig. 4 depicts a standard version of the brake valve assembly 99. In this embodiment, the brake valve 1 is identical to the brake valve 1 shown in Figs. 2 and 3. The embodiment shown in Fig. 4 differs from the embodiments shown in Figs. 2 and 3 in that the functional exhaust element 2 is formed as a silencer 95. The silencer 95 comprises a silencer fixing bracket 96 that engages the valve connection elements 76 and holds a sound insulating material 97 in place. The guide element 26 extends into the sound insulating material 97 such that pressurized air is directly discharged from the exhaust portion 12 into the sound insulating material 97. Excessive noise is thereby prevented. The brake valve 1 is usable in the fording version of the brake valve assembly 99 shown in Figs. 2 and 3 as well as in the standard version shown in Fig. 4. Hence, no brake valve 1 needs to be developed that is only usable in a fording version. Excessive development, tooling and manufacturing cost are thereby prevented.

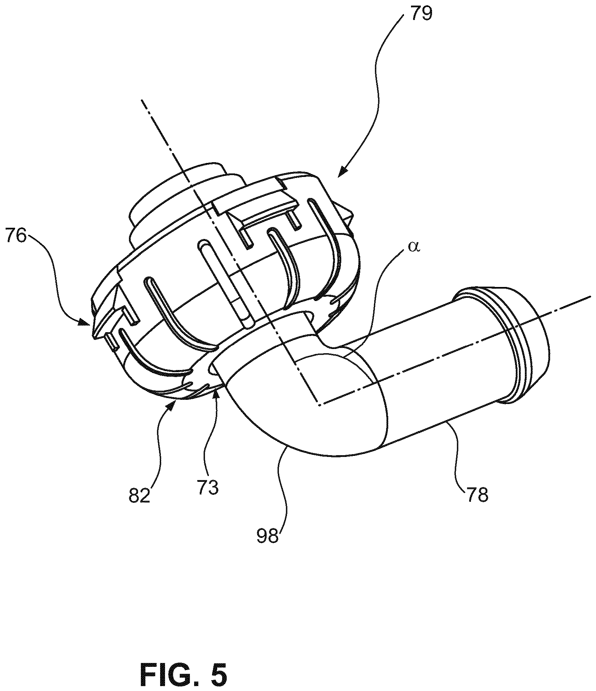

The spout 78 may also be provided in an elbow version having a bend 98 (Fig. 5). The bend 98 is preferably bent in a single plane having a bending angle α of larger 0° to 170°, preferably 5° to 170°, preferably 20° to 150°, preferably 35° to 120°, particularly preferred 90°. Preferably, the spout 78 can also be bent in multiple planes.

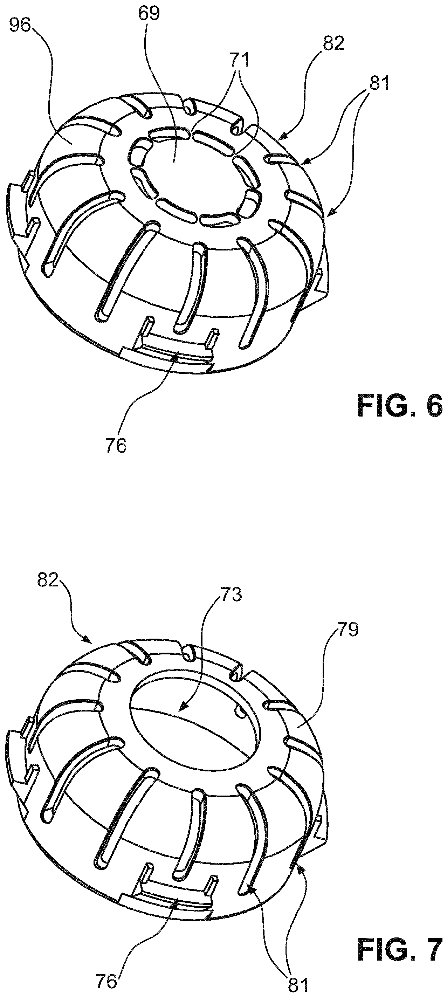

Fig. 6 shows a detailed view of the silencer fixing bracket 96 while Fig. 7 shows a detailed view of the venting guide fixing bracket 79. Both brackets 79, 96 are substantially similar shaped having complementary connection elements 76, the dome portion 82 and the flexing slots 81. The venting guide fixing bracket 79 differs from the silencer fixing bracket 96 in that a spout hole 73 is provided in the dome portion 82 for receiving the spout 78. In the silencer fixing bracket 96 the hole 73 is closed by a cap 69 connected to the dome portion 82 via narrow bridges 71. Both, the venting guide fixing bracket 79 and the silencer fixing bracket 96 can be manufactured with only small changes in the manufacturing process. If for example both pieces are manufactured by injection moulding, the venting guide fixing bracket 79 can be manufactured using the same tool used for manufacturing the silencer fixing bracket 96 with an additional core element provided in the location of the spout hole 73. If no changes shall be made to the tool, the silencer fixing bracket 96 can be converted to the venting guide fixing bracket 79 by manually braking the narrow bridges 71 and removing the cap 69.

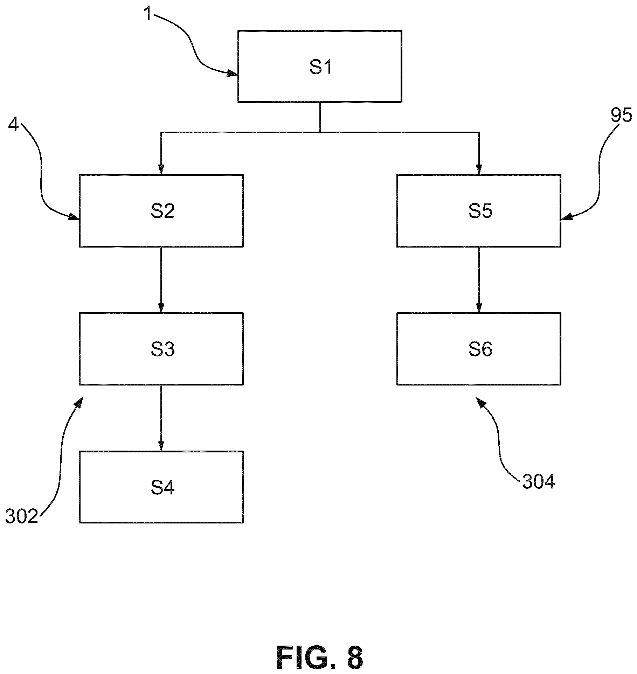

Fig. 8 illustrates an assembly method 300 for assembling a brake valve assembly 99. In a first step S1, a brake valve 1 is provided. Following the first step S1 the method splits into a first flow 302 for assembling a brake valve assembly 99 in a fording version and a second flow 304 for assembling a brake valve assembly 99 in a standard version.

In the first flow 302, a venting guide 4 is provided as the functional exhaust device 2 as a second step S2. In a third step S3 the venting guide 4 engages a valve sealing surface 83 of the brake valve 1. In a fourth step, complementary connection elements 76 of the venting guide 4 engage valve connection elements 74 of the brake valve 1 for fixing the venting guide 4 to the brake valve 1. In the second flow 304, a silencer 95 is provided as the functional exhaust element 2 (step S5). In a sixth step S6, complementary connection elements 76 of the silencer 95 engage with the valve connection elements 74 for fixing the silencer 95 to the brake valve 1.

### LIST OF REFERENCE SIGNS (PART OF THE DESCRIPTION)

- 1: brake valve
- 2: functional exhaust element
- 4: venting guide
- 6: housing
- 8: supply connection
- 10: working connection
- 12: exhaust portion
- 14: actuation element
- 16: brake pedal
- 18: first valve cavity
- 20: second valve cavity
- 21: pressure piece
- 22: piston
- 23: set spring
- 24: valve member
- 25: spring seat
- 26: guide element
- 27: push rod
- 28: exhaust position
- 29: cover
- 30: fully open position
- 32: valve member head
- 33: connector
- 34: first valve member side
- 35: valve seat
- 36: transition
- 37: threaded portion
- 38: second valve member side
- 39: screw
- 40: return spring
- 41: secondary piston
- 42: bottom section
- 43: secondary guide element
- 44: first housing side
- 45: secondary valve member
- 46: lock ring
- 47: secondary valve seat
- 48: outer circumferential face
- 49: secondary supply cavity
- 50: inner wall
- 51: secondary working cavity
- 52: O-ring
- 53: secondary working connection
- 54: second housing side
- 56: second inner wall
- 58: released position
- 60: piston head
- 61: venting guide sealing portion
- 62: hard stop
- 64: piston spring
- 66: internal channel
- 67: exhaust flow path
- 68: through hole
- 69: cap
- 70: exhaust cavity
- 71: bridge
- 72: outer opening
- 73: spout hole
- 74: valve connection elements
- 75: slots
- 76: complementary connection elements
- 77: snap hooks
- 78: spout
- 79: venting guide fixing bracket
- 80: spout shoulder
- 81: flexing slots
- 82: dome portion
- 83: valve sealing surface
- 84: inner sealing face
- 85: first sealing face
- 86: second sealing face
- 87: step
- 88: upstream section
- 89: downstream section
- 90: channel inlet
- 91: bottleneck portion
- 92: channel outlet
- 93: spout end
- 94: spout channel
- 95: silencer
- 96: silencer fixing bracket
- 97: sound insulating material
- 98: bend
- 99: brake valve assembly
- 100: brake system
- 102: front axle brake circuit
- 104: rear axle brake circuit
- 106.1, 106.2: front axle brake actuators
- 108.1, 108.2: rear axle brake actuators
- 110: front axle brake modulator
- 112: rear axle brake modulator
- 114: compressed air supply
- 116: front axle connecting line
- 118: rear axle connecting line
- 120.1, 120.2, 102.3: supply lines
- 122: exhaust line
- 124: remote exhaust silencer
- 200: vehicle
- 202: commercial vehicle
- 204: front axle
- 206: rear axle
- 208.1, 208.2: front wheels
- 210.1, 210.2: rear wheels
- 300: assembly method
- 302: first flow
- 304: second flow
- A1: first internal channel cross sectional area
- A2: second internal channel cross sectional area
- A3: spout cross sectional area
- pB: brake pressure
- pB2: secondary brake pressure
- pS: supply pressure
- S1, S2, S3, S4, S5, S6: steps

## Claims

1. A brake valve (1), comprising
a housing (6);
a supply connection (8) for receiving supply pressure (pS);
a working connection (10) for providing (control) brake pressure (pB);
an exhaust portion (12) for discharging pressurized air from the brake valve (1);
a valve member (24) continuously slidable from an exhaust position (28) to a fully open position (30) including an at least partially open position, wherein the working connection (10) is in fluid communication with the exhaust portion (12) when the valve member (24) is in the exhaust position (28), and wherein the working connection (10) is in fluid communication with the supply connection (8) and sealed from the exhaust portion (12) when the valve member (24) is in the at least partially open position, and
a guide element (26), **characterized in that** :
the valve member (24) is slidably arranged on the guide element (26), the guide element (26) comprising an internal channel (66), wherein the internal channel (66) forms part of an exhaust flow path (67) formed between the working connection (10) and the exhaust portion (12) when the valve member (24) is in the exhaust position (28), wherein a channel inlet (90) of the internal channel (66) is oriented towards the working connection (10),
wherein the exhaust portion (12) comprises one or more valve connection elements (74) arranged downstream of the internal channel (66),
and wherein the brake valve (1) comprises a valve sealing surface (83) for sealingly connecting the brake valve (1) to the exhaust portion (12), or preferably to a functional exhaust device (2), for further discharging the pressurized air received from the brake valve (1) to the environment, wherein the valve sealing surface (83) is arranged downstream of the channel inlet (90) and upstream of the valve connection elements (74).

2. The brake valve (1) according to claim 1, wherein the exhaust portion (12) comprises an exhaust cavity (70) formed in the housing (6), wherein the exhaust cavity (70) comprises an outer opening (72) and wherein the internal channel (66) opens into the exhaust cavity (70).

3. The brake valve (1) according to claim 2, wherein the valve connection elements (74) are arranged between the internal channel (66) and the outer opening (72) of the exhaust cavity (70).

4. The brake valve (1) according to claim 3, wherein the connection elements (74) are formed on an exterior surface of the housing (6).

5. The brake valve (1) according to any of the claims 2 to 4, wherein the valve sealing surface (83) comprises an inner sealing face (84) arranged upstream of the outer opening (72), and wherein at least part of the inner sealing face (84) is preferably oriented substantially parallel to the exhaust flow path (67).

6. The brake valve (1) according to any of the preceding claims, wherein the valve sealing surface (83) is formed on the guide element (26).

7. The brake valve (1) according to any of the preceding claims, wherein the internal channel (66) comprises a channel outlet (92) opposite the channel inlet (90), wherein a bottleneck portion (91) of the exhaust flow path (67) is arranged upstream of the channel outlet (92) of the internal channel (66).

8. The brake valve (1)according to any of the preceding claims, wherein the internal channel (66) comprises an upstream section (88) including a first internal channel cross sectional area (A1) and a downstream section (89) including a second internal channel cross sectional area (A2) larger than the first internal channel cross sectional area (A1), wherein the valve sealing surface (83) is formed on the downstream section (89).

9. A brake valve assembly (99) comprising the brake valve (1) according to any of the preceding claims 1 to 8 and a venting guide (4), wherein the venting guide (4) forms the functional exhaust device (2).

10. The brake valve assembly (99) according to claim 9, wherein the venting guide (4) comprises a spout (78) and a venting guide fixing bracket (79).

11. The brake valve assembly (99) according to claim 10, wherein the spout (78) and the venting guide fixing bracket (79) are separate elements, wherein a venting guide sealing portion (61) for sealingly connecting to the valve sealing surface (83) is formed on the spout (78) and wherein complementary connection elements (76) for engaging the valve connection elements (74) are preferably formed on the venting guide fixing bracket (79).

12. The brake valve assembly (99) according to claim 11, wherein the venting guide fixing bracket (79) is configured to abut the spout (78) on a side opposite the venting guide sealing portion (61) and is preferably configured to press the venting guide sealing portion (61) into contact with the valve sealing surface (83).

13. The brake valve assembly (99) according to any of the claims 10 to 12, comprising a brake valve (1) according to claim 8, wherein a step (87) is formed between the upstream section (88) and the downstream section (89) of the internal channel (66) and wherein the spout (78) abuts the step (87), preferably such that a smooth transition is formed between the upstream section (88) and an internal spout channel (94).

14. A brake valve assembly (99) comprising the brake valve (1) according to any of the claims 1 to 8 and a silencer (95), wherein the silencer (95) forms the functional exhaust device (2), the silencer (95) preferably comprising a silencer fixing bracket (96) and sound insulating material (97).

15. **Brake** system (100) for a vehicle (200), comprising a brake valve (1) according to any of the claims 1 to 8, preferably comprising a brake valve assembly (99) according to any of the claims 9 to 14.

16. A vehicle (200), in particular commercial vehicle (202), comprising a brake system (100) according to claim 15.

17. An assembly method (300) for assembling a brake valve assembly (99), comprising the steps:
- Providing (S1) a brake valve (1) according to any of the claims 9 to 14; and
o Providing (S2) a venting guide (4) preferably as the functional exhaust device (2);
o Engaging (S3) a venting guide sealing portion (61) of the venting guide (4) with a valve sealing surface (83) of the brake valve (1);
o Engaging (S4) a complementary connection element (76) of the venting guide (4) with a valve connection element (74) of the brake valve (1);
or
∘ Providing (S5) a silencer (95) preferably as the functional exhaust device (2); and
∘ Engaging (S6) a complementary connection element (76) of the silencer (95) with a valve connection element (74) of the brake valve (1).

## Patentansprüche

1. Bremsventil (1), umfassend
ein Gehäuse (6);
einen Versorgungsanschluss (8) zum Empfangen von Versorgungsdruck (pS);
einen Arbeitsanschluss (10) zum Bereitstellen eines (Steuer-) Bremsdrucks (pB);
einen Auslassabschnitt (12) zum Ablassen von Druckluft aus dem Bremsventil (1);
ein Ventilelement (24), das von einer Auslassposition (28) in eine vollständig geöffnete Position (30) einschließlich einer mindestens teilweise geöffneten Position stufenlos verschiebbar ist, wobei der Arbeitsanschluss (10) in Fluidverbindung mit dem Auslassabschnitt (12) steht, wenn das Ventilelement (24) in der Auslassposition (28) ist, und wobei der Arbeitsanschluss (10) in Fluidverbindung mit dem Versorgungsanschluss (8) steht und von dem Auslassabschnitt (12) abgedichtet ist, wenn das Ventilelement (24) in der mindestens teilweise geöffneten Position ist, und
ein Führungselement (26), **dadurch gekennzeichnet, dass:**
das Ventilelement (24) auf dem Führungselement (26) verschiebbar angeordnet ist,
das Führungselement (26) umfassend einen Innenkanal (66), wobei der Innenkanal (66) einen Teil eines Auslassströmungspfads (67) ausbildet, der zwischen dem Arbeitsanschluss (10) und dem Auslassabschnitt (12) ausgebildet ist, wenn das Ventilelement (24) in der Auslassposition (28) ist, wobei ein Kanaleingang (90) des Innenkanals (66) zu dem Arbeitsanschluss (10) hin ausgerichtet ist,
wobei der Auslassabschnitt (12) ein oder mehrere Ventilanschlusselemente (74) umfasst, die stromabwärts von dem Innenkanal (66) angeordnet sind,
und wobei das Bremsventil (1) eine Ventildichtungsoberfläche (83) zum dichtenden Anschließen des Bremsventils (1) mit dem Auslassabschnitt (12) oder vorzugsweise mit einer funktionalen Auslassvorrichtung (2) zum weiteren Ablassen der Druckluft, die von dem Bremsventil (1) empfangen wird, an die Umgebung, umfasst, wobei die Ventildichtungsoberfläche (83) stromabwärts von dem Kanaleingang (90) und stromaufwärts von den Ventilanschlusselementen (74) angeordnet ist.

2. Bremsventil (1) nach Anspruch 1, wobei der Auslassabschnitt (12) einen Auslasshohlraum (70) umfasst, der in dem Gehäuse (6) ausgebildet ist, wobei der Auslasshohlraum (70) eine äußere Öffnung (72) umfasst, und wobei der Innenkanal (66) in den Auslasshohlraum (70) mündet.

3. Bremsventil (1) nach Anspruch 2, wobei die Ventilanschlusselemente (74) zwischen dem Innenkanal (66) und der äußeren Öffnung (72) des Auslasshohlraums (70) angeordnet sind.

4. Bremsventil (1) nach Anspruch 3, wobei die Anschlusselemente (74) an einer Außenoberfläche des Gehäuses (6) ausgebildet sind.

5. Bremsventil (1) nach einem der Ansprüche 2 bis 4, wobei die Ventildichtungsoberfläche (83) eine innere Dichtungsoberfläche (84) umfasst, die stromaufwärts von der äußeren Öffnung (72) angeordnet ist, und wobei mindestens ein Teil der inneren Dichtungsoberfläche (84) vorzugsweise im Wesentlichen parallel zu dem Auslassströmungspfad (67) ausgerichtet ist.

6. Bremsventil (1) nach einem der vorstehenden Ansprüche, wobei die Ventildichtungsoberfläche (83) auf dem Führungselement (26) ausgebildet ist.

7. Bremsventil (1) nach einem der vorstehenden Ansprüche, wobei der Innenkanal (66) einen Kanalausgang (92), der dem Kanaleingang (90) gegenüberliegt, aufweist, wobei ein Engpassabschnitt (91) des Auslassströmungspfads (67) stromaufwärts von dem Kanalausgang (92) des Innenkanals (66) angeordnet ist.

8. Bremsventil (1) nach einem der vorstehenden Ansprüche, wobei der Innenkanal (66) einen stromaufwärtigen Bereich (88) einschließlich einer ersten Innenkanalquerschnittsfläche (A1) und einen stromabwärtigen Bereich (89) einschließlich einer zweiten Innenkanalquerschnittsfläche (A2), die größer als die erste Innenkanalquerschnittsfläche (A1) ist, umfasst, wobei die Ventildichtungsoberfläche (83) auf dem stromabwärtigen Bereich (89) ausgebildet ist.

9. Bremsventilbaugruppe (99), umfassend das Bremsventil (1) nach einem der vorstehenden Ansprüche 1 bis 8 und eine Entlüftungsführung (4), wobei die Entlüftungsführung (4) die funktionale Auslassvorrichtung (2) ausbildet.

10. Bremsventilbaugruppe (99) nach Anspruch 9, wobei die Entlüftungsführung (4) eine Tülle (78) und eine Befestigungshalterung (79) für die Entlüftungsführung umfasst.

11. Bremsventilbaugruppe (99) nach Anspruch 10, wobei die Tülle (78) und die Befestigungshalterung (79) für die Entlüftungsführung separate Elemente sind, wobei ein Dichtungsabschnitt (61) für die Entlüftungsführung zum dichtenden Anschließen mit der Ventildichtungsoberfläche (83) auf der Tülle (78) ausgebildet ist, und wobei komplementäre Anschlusselemente (76) zum Eingreifen in die Ventilanschlusselemente (74) vorzugsweise auf der Befestigungshalterung (79) für die Entlüftungsführung ausgebildet sind.

12. Bremsventilbaugruppe (99) nach Anspruch 11, wobei die Befestigungshalterung (79) für die Entlüftungsführung konfiguriert ist, um an der Tülle (78) auf einer Seite, die dem Dichtungsabschnitt (61) für die Entlüftungsführung gegenüberliegt, anliegt, und vorzugsweise konfiguriert ist, um den Dichtungsabschnitt (61) für die Entlüftungsführung in Kontakt mit der Ventildichtungsoberfläche (83) zu drücken.

13. Bremsventilbaugruppe (99) nach einem der Ansprüche 10 bis 12, umfassend ein Bremsventil (1) nach Anspruch 8, wobei eine Stufe (87) zwischen dem stromaufwärtigen Bereich (88) und dem stromabwärtigen Bereich (89) des Innenkanals (66) ausgebildet ist, und wobei die Tülle (78) an der Stufe (87) anliegt, vorzugsweise derart, dass ein glatter Übergang zwischen dem stromaufwärtigen Bereich (88) und einem Innentüllenkanal (94) ausgebildet ist.

14. Bremsventilbaugruppe (99), umfassend das Bremsventil (1) nach einem der Ansprüche 1 bis 8 und einen Schalldämpfer (95), wobei der Schalldämpfer (95) die funktionale Auslassvorrichtung (2) ausbildet, der Schalldämpfer (95) vorzugsweise umfassend eine Befestigungshalterung (96) für den Schalldämpfer und schallisolierendes Material (97).

15. Bremssystem (100) für ein Fahrzeug (200), umfassend ein Bremsventil (1) nach einem der Ansprüche 1 bis 8, vorzugsweise umfassend eine Bremsventilbaugruppe (99) nach einem der Ansprüche 9 bis 14.

16. Fahrzeug (200), insbesondere ein Nutzfahrzeug (202), umfassend ein Bremssystem (100) nach Anspruch 15.

17. Zusammenbauverfahren (300) zum Zusammenbauen einer Bremsventilbaugruppe (99), umfassend die Schritte:
- Bereitstellen (S1) eines Bremsventils (1) nach einem der Ansprüche 9 bis 14; und
o Bereitstellen (S2) einer Entlüftungsführung (4), vorzugsweise als funktionale Auslassvorrichtung (2);
o Eingreifen (S3) eines Dichtungsabschnitt (61) für die Entlüftungsführung der Entlüftungsführung (4) mit einer Ventildichtungsoberfläche (83) des Bremsventils (1);
o Eingreifen (S4) eines komplementären Anschlusselements (76) der Entlüftungsführung (4) mit einem Ventilanschlusselement (74) des Bremsventils (1);
oder
o Bereitstellen (S5) eines Schalldämpfers (95), vorzugsweise als funktionale Auslassvorrichtung (2); und
o Eingreifen (S6) eines komplementären Anschlusselements (76) des Schalldämpfers (95) mit einem Ventilanschlusselement (74) des Bremsventils (1).

## Revendications

1. Soupape de frein (1), comprenant
un boîtier (6) ;
un raccord d'alimentation (8) pour recevoir une pression d'alimentation (pS) ;
un raccord de travail (10) pour fournir (commander) une pression de frein (pB) ;
une partie d'échappement (12) pour évacuer l'air sous pression de la soupape de frein (1) ;
un élément soupape (24) pouvant coulisser en continu d'une position d'échappement (28) à une position totalement ouverte (30) comportant une position au moins partiellement ouverte, dans laquelle le raccord de travail (10) est en communication fluidique avec la partie d'échappement (12) lorsque l'élément soupape (24) est dans la position d'échappement (28), et dans laquelle le raccord de travail (10) est en communication fluidique avec le raccord d'alimentation (8) et scellé par rapport à la partie d'échappement (12) lorsque l'élément soupape (24) est dans la position au moins partiellement ouverte, et
un élément de guide (26), **caractérisée en ce que :**
l'élément soupape (24) est agencé de manière à pouvoir coulisser
sur l'élément de guide (26),
l'élément de guide (26) comprenant un canal interne (66), dans laquelle le canal interne (66) forme une partie d'une voie d'écoulement d'échappement (67) formée entre le raccord de travail (10) et la partie d'échappement (12) lorsque l'élément soupape (24) est dans la position d'échappement (28), dans laquelle une entrée de canal (90) du canal interne (66) est orientée vers le raccord de travail (10),
dans laquelle la partie échappement (12) comprend un ou plusieurs éléments de raccord de soupape (74) agencés en aval du canal interne (66),
et dans laquelle la soupape de frein (1) comprend une surface d'étanchéité de soupape (83) pour raccorder de manière scellée la soupape de frein (1) à la partie d'échappement (12), ou de préférence à un dispositif d'échappement fonctionnel (2), pour évacuer en outre l'air sous pression reçu de la soupape de frein (1) dans l'environnement, dans laquelle la surface d'étanchéité de soupape (83) est agencée en aval de l'entrée de canal (90) et en amont des éléments de raccord de soupape (74).

2. Soupape de frein (1) selon la revendication 1, dans laquelle la partie d'échappement (12) comprend une cavité d'échappement (70) formée dans le boîtier (6), dans laquelle la cavité d'échappement (70) comprend une ouverture externe (72) et dans laquelle le canal interne (66) s'ouvre dans la cavité d'échappement (70).

3. Soupape de frein (1) selon la revendication 2, dans laquelle les éléments de raccord de soupape (74) sont agencés entre le canal interne (66) et l'ouverture externe (72) de la cavité d'échappement (70).

4. Soupape de frein (1) selon la revendication 3, dans laquelle les éléments de raccord (74) sont formés sur une surface extérieure du boîtier (6).

5. Soupape de frein (1) selon l'une quelconque des revendications 2 à 4, dans laquelle la surface d'étanchéité de soupape (83) comprend une face d'étanchéité interne (84) agencée en amont de l'ouverture externe (72), et dans laquelle au moins une partie de la face d'étanchéité interne (84) est de préférence orientée sensiblement parallèlement à la voie d'écoulement d'échappement (67).

6. Soupape de frein (1) selon l'une quelconque des revendications précédentes, dans laquelle la surface d'étanchéité de soupape (83) est formée sur l'élément de guide (26).

7. Soupape de frein (1) selon l'une quelconque des revendications précédentes, dans laquelle le canal interne (66) comprend une sortie de canal (92) opposée à l'entrée de canal (90), dans laquelle une partie de goulot d'étranglement (91) de la voie d'écoulement d'échappement (67) est agencée en amont de la sortie de canal (92) du canal interne (66).

8. Soupape de frein (1) selon l'une quelconque des revendications précédentes, dans laquelle le canal interne (66) comprend une section amont (88) comportant une première aire en section transversale (A1) de canal interne et une section aval (89) comportant une seconde aire en section transversale (A2) de canal interne plus grande que la première aire en section transversale (A1) de canal interne, dans laquelle la surface d'étanchéité de soupape (83) est formée sur la section aval (89).

9. Ensemble soupape de frein (99) comprenant la soupape de frein (1) selon l'une quelconque des revendications précédentes 1 à 8 et un guide de ventilation (4), dans lequel le guide de ventilation (4) forme le dispositif d'échappement fonctionnel (2).

10. Ensemble soupape de frein (99) selon la revendication 9, dans lequel le guide de ventilation (4) comprend un bec (78) et un support de fixation (79) de guide de ventilation.

11. Ensemble soupape de frein (99) selon la revendication 10, dans lequel le bec (78) et le support de fixation (79) de guide de ventilation sont des éléments séparés, dans lequel une partie d'étanchéité de guide de ventilation (61) pour se raccorder de manière scellée à la surface d'étanchéité de soupape (83) est formée sur le bec (78) et dans lequel des éléments de raccord complémentaires (76) pour venir en prise les éléments de raccord de soupape (74) sont de préférence formés sur le support de fixation (79) de guide de ventilation.

12. Ensemble soupape de frein (99) selon la revendication 11, dans lequel le support de fixation (79) de guide de ventilation est conçu pour venir en butée contre le bec (78) sur un côté opposé à la partie d'étanchéité de guide de ventilation (61) et est de préférence conçu pour presser la partie d'étanchéité de guide de ventilation (61) en contact avec la surface d'étanchéité de soupape (83).

13. Ensemble soupape de frein (99) selon l'une quelconque des revendications 10 à 12, comprenant une soupape de frein (1) selon la revendication 8, dans lequel une marche (87) est formée entre la section amont (88) et la section aval (89) du canal interne (66) et dans lequel le bec (78) vient en butée contre la marche (87), de préférence de telle sorte qu'une transition douce est formée entre la section amont (88) et un canal de bec interne (94).

14. Ensemble soupape de frein (99) comprenant la soupape de frein (1) selon l'une quelconque des revendications 1 à 8 et un silencieux (95), dans lequel le silencieux (95) forme le dispositif d'échappement fonctionnel (2), le silencieux (95) comprenant de préférence un support de fixation (96) de silencieux et un matériau insonorisant (97).

15. Système de frein (100) pour un véhicule (200), comprenant une soupape de frein (1) selon l'une quelconque des revendications 1 à 8, comprenant de préférence un ensemble soupape de frein (99) selon l'une quelconque des revendications 9 à 14.

16. Véhicule (200), en particulier un véhicule utilitaire (202), comprenant un système de frein (100) selon la revendication 15.

17. Procédé d'assemblage (300) pour l'assemblage d'un ensemble soupape de frein (99), comprenant les étapes :
- de fourniture (S1) d'une soupape de frein (1) selon l'une quelconque des revendications 9 à 14 ; et
o de fourniture (S2) d'un guide de ventilation (4), de préférence en guise de dispositif d'échappement fonctionnel (2) ;
o de mise en prise (S3) d'une partie d'étanchéité de guide de ventilation (61) du guide de ventilation (4) avec une surface d'étanchéité de soupape (83) de la soupape de frein (1) ;
o de mise en prise (S4) d'un élément de raccord complémentaire (76) du guide de ventilation (4) avec un élément de raccord de soupape (74) de la soupape de frein (1) ;
ou
o de fourniture (S5) d'un silencieux (95) de préférence sous la forme du dispositif d'échappement fonctionnel (2) ; et
o de mise en prise (S6) d'un élément de raccord complémentaire (76) du silencieux (95) avec un élément de raccord de soupape (74) de la soupape de frein (1).
